# EUROPEAN PATENT SPECIFICATION

(11) **EP 3 820 728 B1**
(45) Date of publication and mention of the grant of the patent: **01.02.2023**
(21) Application number: 18759389.2
(22) Date of filing: 13.07.2018
(51) Int. Cl.: B60K 37/02, B60K 35/00, B60R 11/04

(54) **DISPLAY INSTRUMENT CLUSTER WITH DRIVER MONITORING CAMERA AND MANUFACTURING METHOD THEREOF**
ANZEIGEINSTRUMENTEN-CLUSTER MIT FAHRERÜBERWACHUNGSKAMERA UND VERFAHREN ZUR HERSTELLUNG DAVON
GROUPE D'INSTRUMENTS D'AFFICHAGE AVEC CAMÉRA DE SURVEILLANCE DE CONDUCTEUR ET SON PROCÉDÉ DE FABRICATION

(30) Priority: 11.07.2018 PT 2018110837
(43) Date of publication of application: 19.05.2021
(73) Proprietor: Bosch Car Multimedia Portugal, S.A., 4705-820 Braga (PT)
(72) Inventor: GONÇALVES COSTA, Catarina, 4705-820 Braga (PT); TEIXEIRA CARDOSO, Rui Miguel, 4705-820 Braga (PT); MACEDO, Ricardo, 4705-820 Braga (PT)
(74) Representative: Patentree
(86) International application number: PCT/IB2018/055214
(87) International publication number: WO 2020/012232

(56) References cited:
- DE-A1-102015 207 982
- JP-A- 2007 055 430
- JP-B2- 5 206 314
- JP-B2- 5 206 314
- US-A1- 2008 068 462

## Description

### Technical field

The present invention relates to a display instrument cluster with driver monitoring camera and manufacturing method thereof, which provides seamless integration of an imaging device and illumination for a driver monitoring system on an instrument cluster, in particular for automotive applications.

### Background

US20040047058 discloses an apparatus for an in-vehicle occupant image pickup system which includes an image pickup unit for shooting a face of an occupant of a vehicle, and a mirror installed in an instrument panel on a dashboard of the vehicle. The image pickup unit is located in a blind spot for the occupant, behind a hood that is provided in the dashboard of the vehicle, but reflection in the mirror enables the image pickup unit to acquire an image of the face of the occupant.

Document DE102015007362A1 discloses a combination instrument for a motor vehicle with at least a monitoring equipment, which is trained to monitor the state of the driver of the vehicle. The combination instrument includes at least a system to hide an observation device with a polarizing filter. The document also relates to a motor vehicle with at least one combination instrument.

Document US2004252993A1 discloses an infrared camera, which is arranged in an interior rear-view mirror of a vehicle. The camera is located behind a mirror permeable to IR light inside of the interior rear-view mirror. Provides images of a driver and a fellow passenger who are a photographic subject but without having sense of incongruity, without making them conscious of existence of an infrared camera.

Document US2004047058 proposes an imaging system that would not be perceived by the driver and with a imaging angle since the images of the driver's face can be shot from a position near the driver and from a direction directly opposite thereto, the face of the driver or other occupants can be shot in a natural state from the direction directly opposite thereto.

In document DE102015007362A1 it is proposed an instrument cluster with an integrated imaging system. The observation facility is hidden behind a polarizing filter and uses visible light.

Document US2004252993A1 proposes an imaging system with IR illumination contained in a mirror case.

Document US2017264797 discloses a driver monitoring system for a motor vehicle, including at least one camera device, which has at least one camera unit situated on a support element and at least one infrared emitter. It is provided that the support element includes at least one device for locking the infrared emitter in place on the support element.

Document DE102015207982, for which the preamble of claims 1 and 12 relates, discloses a combination instrument for a vehicle, the instrument cluster having the following features: a display; at least one outside, in particular above or below the display arranged camera for detecting a face of the driver; and at least one first infrared light source arranged laterally of the display and a second infrared light source arranged laterally of the display for illuminating the face with infrared light.

These facts are disclosed in order to illustrate the technical problem addressed by the present disclosure.

### General Description

A display instrument cluster and a method for manufacture thereof, according to the present invention, is characterised by the features recited in the characterising portion of claims 1 and 12, respectively.

This invention proposes a seamless integration of a driver monitoring system in a full programmable instrument cluster of a vehicle. This system includes one or more cameras and, one or more illumination units in different positions of the instrument cluster, allowing different angles of incidence to image the driver's face. Both, camera and illumination units, are under the cover glass that also covers a display and LED warning signals.

The main improvements provided for this invention are a full seamless appearance for the driver, completely hiding the camera and illuminators. Differences in the appearance of the cover glass printing are prevented, presenting a uniform painting. This provides a better esthetic appearance, with good design aspect, and avoids psychological effects for perceiving the existence of the camera and the awareness of being observed, that may cause discomfort or pressure on the driver.

The process used to ensure a seamless appearance can be obtained by a specific painting procedure without compromising the image quality and monitoring function.

The invention allows great flexibility to include several cameras and illuminators.

The present invention avoids the color differences between different inks and elements such that the driver cannot perceive visual differences revealing the presence of the imaging device. The invention also avoids reflections causing image distortions and aberrations that may harm camera function and detection algorithms, obtaining images from the driver's facial features and eye gaze without complex optical paths, the illumination focusing directly on the driver, and the reflected image is obtained directly by the camera with high optical efficiency.

In particular, this invention can be proved on a product if it shows a freely programmable instrument cluster with an integrated driver monitoring system with a seamless appearance. Moreover, the process used to create this seamless design can be analyzed, such as the applied inks and its arrangement.

The invention may be used in a Driver Monitoring Camera (DMC) project.

It is claimed a display instrument cluster with a driver monitoring camera, comprising a display, a display cover glass, one or more visible light indicators, and a plurality of optical layers between the cover glass and the display, said layers comprising in the direction from the cover glass to the display:
a masking IR layer which is transparent to infrared and opaque to visible light,
a dead-front layer which is a partially-transparent black ink for giving the cluster a monochromatic surface when the
light indicator or indicators are switched off, and
a black print layer which is opaque to infrared and visible light;
wherein the masking IR layer, dead-front layer and black print layer have an opening for the display,
wherein the dead-front layer and the black print layer comprise an opening in the optical path of said camera, and
the masking IR layer covers the optical path of said camera.

In an embodiment, the display instrument cluster comprises one or more IR illuminators for illuminating the driver with infrared light, wherein the dead-front layer and the black print layer comprise an opening over for the IR illuminator or illuminators, and the masking IR layer covers the IR illuminator or illuminators.

In an embodiment, the light indicator or indicators are for indicating a symbol or symbols, wherein the black print layer comprises an opening or openings over for the light indicator or indicators, the dead-front layer covers the light indicator or indicators, and the masking IR layer comprises symbol-shaped opening or openings over the light indicator or indicators. The symbol may be textual or a graphic.

In an embodiment, the display instrument cluster comprises a homogenization layer between the black print layer and the display for diffusing light from the light indicator or indicators, wherein the homogenization layer covers for the light indicator or indicators, the homogenization layer comprises openings over for the display and the camera, and the homogenization layer also has openings over, if existing, the IR illuminator or illuminators.

In an embodiment, the opening of the dead-front layer and of the black print layer for the driver monitoring camera is located above an upper region of the display.

In an embodiment, the opening of the dead-front layer and of the black print layer for the IR illuminator or illuminators is located below a lower region of the display.

In an embodiment, the openings of the black print layer and of the masking IR layer for the light indicator or indicators are located laterally to the sides of the display.

In an embodiment, the display instrument cluster comprising a plurality of driver monitoring cameras having the same layer openings and layer covers as said driver monitoring camera.

In an embodiment, the infrared is near-infrared, in particular light between 850 to 950 nm wavelengths.

In an embodiment, the display instrument cluster further comprises, on the cover glass, in direction opposite the direction towards the display: an anti-reflection layer, an anti-glare layer, an anti-fingerprint layer, or combinations thereof.

It is also claimed a method for manufacturing an automotive display instrument cluster with a driver monitoring camera, comprising a display, a display cover glass, one or more visible light indicators, said method comprising:
providing a plurality of optical layers between the cover glass and the display, said layers comprising in the direction from the cover glass to the display:
   a masking IR layer which is transparent to infrared and opaque to visible light,
   a dead-front layer for giving the cluster a monochromatic surface when the light indicator or indicators are switched off, and a black print layer which is opaque to infrared and visible light;
wherein the masking IR layer, dead-front layer and black print layer have an opening for the display, wherein the dead-front layer and the black print layer comprise an opening in the optical path of said camera, and the masking IR layer covers the optical path of said camera.

A dead-front layer is a layer for symbols or messages not being readily visible unless the symbols or messages are lit up with a light source. Dead-fronts are used in front-panel and keyboard-overlays. Dead-fronting is a technique referring to a partially-transparent black ink that has been printed behind an open area in a front panel or overlay. Behind the display is a light indicator, usually a light emitting diode (LED). When energized, the LED lights the display to reveal a symbol or printed message through the dead-front layer, as viewed by an observer from outside the illuminated panel. However, if viewed by the observer when the LED light is off, the dead-front layer causes the panel to be dark such that the observer cannot see neither the symbol or message, nor the LED and electronics behind the panel. A dead-front layer is designed so the symbols or messages are not readily visible unless the symbols or messages are lit up with a light source. A dead-front effect results in which the panel appears to the user as a monochromatic surface when the light source is switched off.

### Brief Description of the Drawings

The following figures provide preferred embodiments for illustrating the description and should not be seen as limiting the scope of invention.
**Figure 1** is a schematic representation of an embodiment of the complete seamless integration of an instrument cluster with a driver monitoring system.
**Figure 2** is a schematic representation of an embodiment of the cover glass surface facing the driver (front side) the glass may have several finishing treatments, such as anti-reflection (AR), anti-glare (AG) and anti-fingerprint (AFP), among others.
**Figure 3** is a schematic representation of an embodiment of the IR print which is the first layer applied on the cover glass.
**Figure 4** is a schematic representation of an embodiment of the IR print which should preferably have windows to allow the visibility of the warning signs.

### Detailed Description

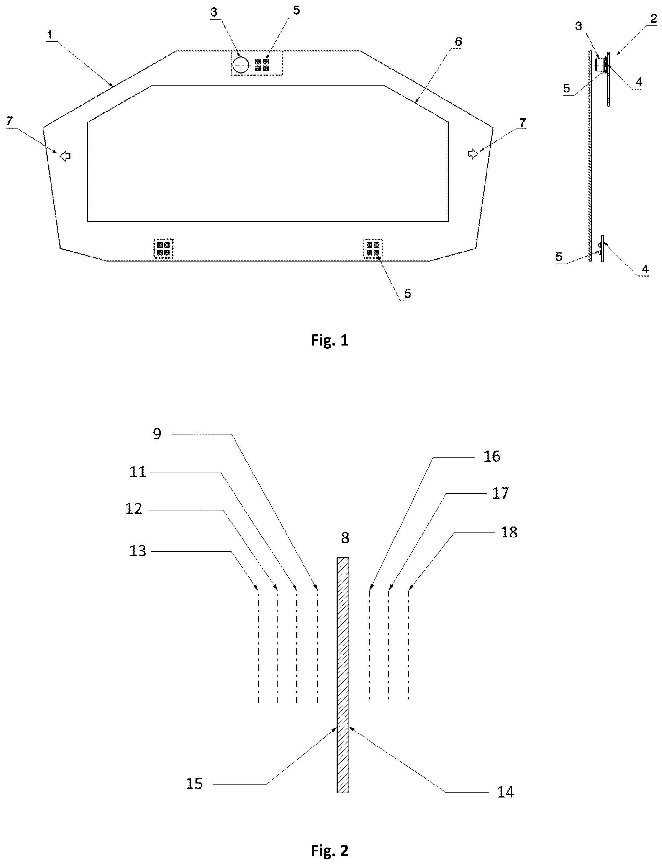

This invention proposes a device and method to disguise a driver monitoring system in a full programmable instrument cluster. The details will be described with reference to **Figures 1** to **4****.**

As illustrated in **Figure 1****,** this system according to an embodiment includes a completely seamless integration of an instrument cluster **1** with a driver monitoring system **2.** This should preferably include, at least one imaging camera **3,** at least one illumination unit **4,** composed by several LEDs **5** with emission in the NIR wavelengths, one or more displays **6,** and visible light LEDs as warning signs **7.** All these elements, according to an embodiment, are integrated under a cover glass, with different printed areas. The position and arrangement of camera and illuminators is not limited to the presented on the images, serving only as one of the possible embodiments.

On the cover glass surface, according to an embodiment, facing the driver (front side **14**) the glass **8** may have several finishing treatments, such as anti-reflection **17,** anti-glare **16** and anti-fingerprint **18,** as shown on **Figure 2****.** On the cover glass surface facing the camera (printed area **15**) different inks can be printed with the desired characteristics. The first layer on top of the cover glass, according to an embodiment, should be an ink with IR transmitting characteristics, IR print **9.** This print, according to an embodiment, should block the transmission of visible wavelengths, below 800nm (in particular less than 3%), and allow the transmission of the NIR wavelengths, in particular with transmission over 80%.

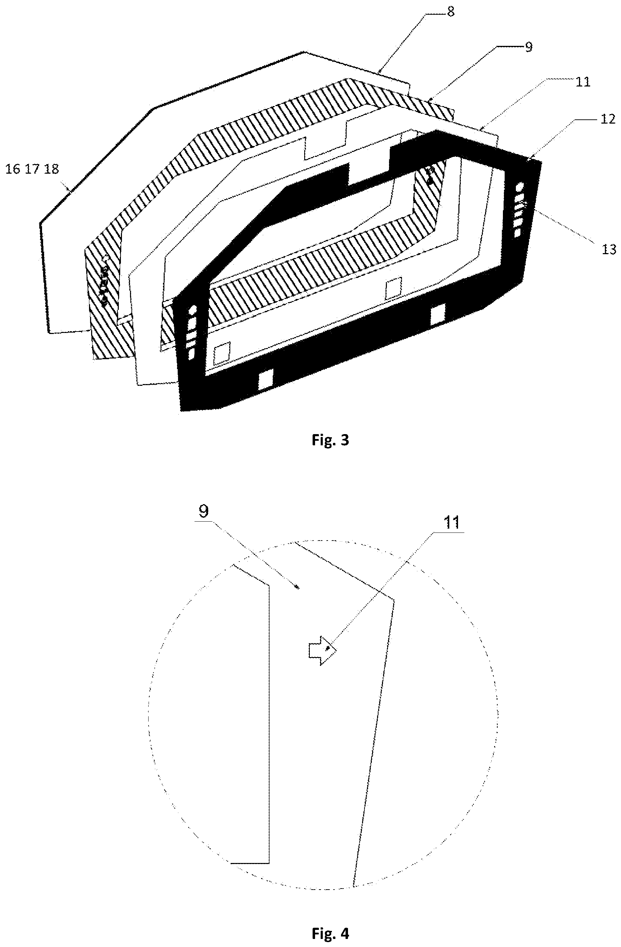

In **Figure 3** is shown that the IR print is, according to an embodiment, the first layer applied on the cover glass, this way it is assured a uniform appearance, avoiding the awareness of transition borders or overlapping of different prints, which would show the existence the of driver monitoring system a and cause cosmetic defects.

IR print should have windows, according to an embodiment, to allow the visibility of the warning signs **7,** which are only covered with dead-front print **11,** as illustrated on **Figure 4****.** On top of the IR passing ink, other prints with different properties are applied, such as, but not limited to: dead-front **11,** black print **12** and homogenization layer **13.** The remaining prints, according to an embodiment, should have specific windows to avoid interference with illumination and image acquisition.

The illumination is provided by the NIR LEDs **5,** according to an embodiment, which emit light with centroid between 850 to 950 nm. Wavelengths in this range pass through the IR ink since it is transparent to this part of the spectrum, and thus does not affect the illumination power and uniformity.

This way, the NIR light illuminates the drivers face and allow further capture of the image by the camera **3,** according to an embodiment. The light reflected on the drivers face travels through the cover glass **8,** IR ink **9** and lens system, sensible to the NIR wavelengths, to form the image on the camera **3.** The information is them processed to be analyzed by the appropriate software to identify the critical facial features, driver's pose and eye gaze.

All this process is able to occur without disturbing the driver, since all the driver monitoring system **2** is completely indistinguishable behind the cover glass **8.**

Suitable materials include Nazdar^{™} NSC61 IR Transmitting Black Screen Ink, Epolin Spectre^{™} VOIRT screen inks. Spectre 110 absorbs UV and visible light while allowing transmittance of IR (infrared) light - blocks light from 200 to 695nm. Spectre 100 Absorbs UV and visible light while allowing transmittance of IR (infrared) light - blocks light from 200 to 675nm. When printed, Spectre VOIRT coatings are visibly opaque and transmit NIR wavelengths. Spectre screen inks can be printed on PET, polycarbonate and PVC substrates. Visualplas^{™} IR Transmission Ink is based on IR management technology. Visualplas^{™} IR transmissive ink is highly transparent to 800-1100nm NIR, while absorbing 300-700nm UV and visible light. Visualplas^{™} IRY ink can be screen printed or gravure printed. It can be applied to many substrates such as PET and PC.

## Claims

1. Display instrument cluster (1) with a driver monitoring camera, comprising a display (6), a display cover glass (8), and one or more visible light indicators (7), **characterised by** further comprising a plurality of optical layers between the cover glass (8) and the display (6), said layers comprising in the direction from the cover glass (8) to the display (6):
a masking IR layer (9) which is transparent to infrared and opaque to visible light,
a dead-front layer (11) which is a partially-transparent black ink for giving the cluster a monochromatic surface when the light indicator or indicators are switched off, and
a black print layer (12) which is opaque to infrared and visible light;
wherein the masking IR layer (9), dead-front layer (11) and black print layer (12) have an opening for the display (6),
wherein the dead-front layer (11) and the black print layer (12) comprise an opening in the optical path of said camera (3), and
the masking IR layer (9) covers the optical path of said camera (3).

2. Display instrument cluster (1) according to the previous claim comprising one or more IR illuminators (5) for illuminating the driver with infrared light,
wherein the dead-front layer (11) and the black print layer (12) comprise an opening over the IR illuminator or illuminators (5), and
the masking IR layer (9) covers the IR illuminator or illuminators (5).

3. Display instrument cluster (1) according to any of the previous claims, wherein said light indicator or indicators (7) are for indicating a symbol or symbols, wherein the black print layer (12) comprises an opening or openings over the light indicator or indicators (7),
the dead-front layer (11) covers the light indicator or indicators (7), and
the masking IR (9) layer comprises symbol-shaped opening or openings over the light indicator or indicators (7).

4. Display instrument cluster (1) according to any of the previous claims, comprising a homogenization layer (13) between the black print layer (12) and the display (6) for diffusing light from the light indicator or indicators (7), wherein the homogenization layer (13) covers the light indicator or indicators (7),
the homogenization layer (13) comprises openings over the display (6) and the camera (3), and
the homogenization layer (13) also has openings over, if existing, the IR illuminator or illuminators (5).

5. Display instrument cluster (1) according to any of the previous claims wherein the opening of the dead-front layer (11) and of the black print layer (12) for the driver monitoring camera is located above an upper region of the display (6).

6. Display instrument cluster (1) according to any of the claims 2-5 wherein the opening of the dead-front layer (11) and of the black print layer (12) for the IR illuminator or illuminators (5) is located below a lower region of the display (6).

7. Display instrument cluster (1) according to any of the previous claims wherein the openings of the black print layer (12) and of the masking IR layer (9) for the light indicator or indicators (7) are located laterally to the sides of the display (6).

8. Display instrument cluster (1) according to any of the previous claims comprising one or more additional driver monitoring cameras having the same layer openings and layer covers as said driver monitoring camera.

9. Display instrument cluster (1) according to any of the previous claims wherein infrared is near-infrared.

10. Display instrument cluster (1) according to the previous claim wherein near-infrared is light having a wavelength between 850 to 950 nm.

11. Display instrument cluster (1) according to any of the previous claims further comprising, on the cover glass, in direction opposite the direction towards the display: an anti-reflection layer (17), an anti-glare layer (16), an anti-fingerprint layer (18), or combinations thereof.

12. Method for manufacturing an automotive display instrument cluster (1) with a driver monitoring camera, comprising a display (6), a display cover glass (8), one or more visible light indicators (7), **characterised by** said method comprising:
providing a plurality of optical layers between the cover glass (8) and the display (6), in the direction from the cover glass (8) to the display (6), by:
applying a masking IR layer (9) which is transparent to infrared and opaque to visible light,
applying a dead-front layer (11) which is a partially-transparent black ink for giving the cluster a monochromatic surface when the light indicator or indicators (7) are switched off, and
applying a black print layer (12) which is opaque to infrared and visible light;
wherein the masking IR layer (9), dead-front layer (11) and black print layer (12) have an opening for the display (6), wherein the dead-front layer (11) and the black print layer (12) comprise an opening in the optical path of said camera (3), and the masking IR layer (9) covers the optical path of said camera (3).

## Patentansprüche

1. Anzeigeninstrumenten-Cluster (1) mit einer Fahrerüberwachungskamera, umfassend ein Display (6), ein Deckglas für das Display (8) und ein oder mehrere sichtbare Leuchtanzeigen (7), ferner **dadurch gekennzeichnet, dass** er eine Vielzahl optischer Schichten zwischen dem Deckglas (8) und dem Display (6) umfasst, wobei die genannten Schichten in der Richtung von dem Deckglas (8) zu dem Display (6) umfassen:
eine IR-Maskierungsschicht (9), die für Infrarotlicht transparent und für sichtbares Licht undurchlässig ist,
eine Dead-Front-Schicht (11), bei der es sich um eine teilweise durchsichtige schwarze Tinte handelt, um dem Cluster eine einfarbige Oberfläche zu verleihen, wenn die Leuchtanzeige oder die Leuchtanzeigen ausgeschaltet sind, und
eine schwarze Druckschicht (12), die für infrarotes und sichtbares Licht undurchlässig ist; wobei die IR-Maskierungsschicht (9), die Dead-Front-Schicht (11) und die schwarze Druckschicht (12) eine Öffnung für das Display (6) aufweisen,
wobei die Dead-Front-Schicht (11) und die schwarze Druckschicht (12) eine Öffnung im optischen Pfad der genannten Kamera (3) aufweisen, und
die IR-Maskierungsschicht (9) den optischen Pfad der genannten Kamera (3) abdeckt.

2. Anzeigeninstrumenten-Cluster (1) nach dem vorangehenden Anspruch, umfassend eine oder mehrere IR-Beleuchtungen (5) um den Fahrer mit Infrarotlicht zu beleuchten, wobei die Dead-Front-Schicht (11) und die schwarze Druckschicht (12) eine Öffnung über der IR-Beleuchtung oder den IR-Beleuchtungen (5) aufweisen,
und die IR-Maskierungsschicht (9) die IR-Beleuchtung oder Beleuchtungen (5) abdeckt.

3. Anzeigeninstrumenten-Cluster (1) nach einem der vorangehenden Ansprüche, wobei die genannte Leuchtanzeige oder die genannten Leuchtanzeigen (7) zur Anzeige eines Symbols oder mehrerer Symbole dienen,
wobei die schwarze Druckschicht (12) eine Öffnung oder Öffnungen über der Leuchtanzeige oder den Leuchtanzeigen (7) aufweist,
die Dead-Front-Schicht (11) die Leuchtanzeige oder die Leuchtanzeigen (7) abdeckt, und die IR-Maskierungsschicht (9) eine symbolförmige Öffnung oder Öffnungen über dem Leuchtanzeige oder den Leuchtanzeigen (7) aufweist.

4. Anzeigeninstrumenten-Cluster (1) nach einem der vorangehenden Ansprüche, umfassend eine Homogenisierungsschicht (13) zwischen der schwarzen Druckschicht (12) und dem Display (6) zur Streuung des Lichts der Leuchtanzeige oder der Leuchtanzeigen (7),
wobei die Homogenisierungsschicht (13) die Leuchtanzeige oder Leuchtanzeigen (7) abdeckt,
die Homogenisierungsschicht (13) Öffnungen über dem Display (6) und der Kamera (3) aufweist, und
die Homogenisierungsschicht (13) außerdem, falls vorhanden, Öffnungen über der IR-Beleuchtung oder den IR-Beleuchtungen (5) aufweist.

5. Anzeigeninstrumenten-Cluster (1) nach einem der vorangehenden Ansprüche, wobei die Öffnung der Dead-Front-Schicht (11) und der schwarzen Druckschicht (12) für die Fahrerüberwachungskamera oberhalb eines oberen Bereichs des Displays (6) angeordnet ist.

6. Anzeigeninstrumenten-Cluster (1) nach einem der Ansprüche 2-5, wobei die Öffnung der Dead-Front-Schicht (11) und der schwarzen Druckschicht (12) für die IR-Beleuchtung oder IR-Beleuchtungen (5) unterhalb eines unteren Bereichs des Displays (6) liegt.

7. Anzeigeninstrumenten-Cluster (1) nach einem der vorangehenden Ansprüche, wobei die Öffnungen der schwarzen Druckschicht (12) und der IR-Maskierungsschicht (9) für die Leuchtanzeige oder Leuchtanzeigen (7) seitlich an den Seiten des Displays (6) angeordnet sind.

8. Anzeigeninstrumenten-Cluster (1) nach einem der vorangehenden Ansprüche mit einer oder mehreren zusätzlichen Fahrerüberwachungskameras, die die gleichen Schichtöffnungen und Schichtabdeckungen wie die genannte Fahrerüberwachungskamera aufweisen.

9. Anzeigeninstrumenten-Cluster (1) nach einem der vorangehenden Ansprüche, wobei das Infrarot-Licht ein Nahinfrarotlicht ist.

10. Anzeigeninstrumenten-Cluster (1) nach dem vorangehenden Anspruch, wobei das Nahinfrarotlicht eine Wellenlänge zwischen 850 und 950 nm aufweist.

11. Anzeigeninstrumenten-Cluster (1) nach einem der vorangehenden Ansprüche, ferner umfassend, auf dem Deckglas, in entgegengesetzter Richtung zur Richtung zu dem Display: eine Antireflexionsbeschichtung (17), eine Blendschutzschicht (16), eine Antifingerprint-Schicht (18), oder Kombinationen davon.

12. Verfahren zur Herstellung eines Anzeigeninstrumenten-Clusters für Fahrzeuge (1) mit einer Fahrerüberwachungskamera, umfassend ein Display (6), ein Deckglas für das Display (8), ein oder mehrere sichtbare Leuchtanzeigen (7), **dadurch gekennzeichnet, dass** das genannte Verfahren umfasst:
Bereitstellen eine Vielzahl optischer Schichten zwischen dem Deckglas (8) und dem Display (6) in der Richtung von dem Deckglas (8) zu dem Display (6), durch:
Aufbringen einer IR-Maskierungsschicht (9), die für Infrarotlicht transparent und für sichtbares Licht undurchlässig ist,
Aufbringen einer Dead-Front-Schicht (11), bei der es sich um eine teilweise durchsichtige schwarze Tinte handelt, um dem Cluster eine einfarbige Oberfläche zu verleihen, wenn die Leuchtanzeige oder die Leuchtanzeigen (7) ausgeschaltet sind, und
Aufbringen einer schwarzen Druckschicht (12), die für infrarotes und sichtbares Licht undurchlässig ist;
wobei die IR-Maskierungsschicht (9), die Dead-Front-Schicht (11) und die schwarze Druckschicht (12) eine Öffnung für das Display (6) aufweisen, wobei die Dead-Front-Schicht (11) und die schwarze Druckschicht (12) eine Öffnung im optischen Pfad der genannten Kamera (3) aufweisen und die IR-Maskierungsschicht (9) den optischen Pfad der genannten Kamera (3) abdeckt.

## Revendications

1. Groupe d'instruments d'affichage (1) avec une caméra de surveillance de conducteur, comprenant un écran (6), un verre de protection d'écran (8), et un ou plusieurs indicateurs de lumière visible (7), **caractérisé en ce qu'**il comprend également une pluralité de couches optiques entre le verre de protection (8) et l'écran (6), lesdites couches comprenant dans la direction allant du verre de protection (8) vers l'écran (6):
une couche IR de masquage (9) qui est transparente à l'infrarouge et opaque à la lumière visible,
une couche isolée (11) qui est une encre noire partiellement transparente pour donner au groupe une surface monochromatique lorsque l'indicateur ou les indicateurs lumineux sont éteints, et
une couche d'impression noire (12) qui est opaque à l'infrarouge et à la lumière visible ;
dans lequel la couche IR de masquage (9), la couche isolée (11) et la couche d'impression noire (12) ont une ouverture pour l'écran (6),
dans lequel la couche isolée (11) et la couche d'impression noire (12) comprennent une ouverture dans le trajet optique de ladite caméra (3), et
la couche IR de masquage (9) couvre le trajet optique de ladite caméra (3).

2. Groupe d'instruments d'affichage (1) selon la revendication précédente comprenant un ou plusieurs illuminateurs IR (5) pour illuminer le conducteur avec une lumière infrarouge,
dans lequel la couche isolée (11) et la couche d'impression noire (12) comprennent une ouverture sur l'illuminateur ou les illuminateurs IR (5), et
la couche IR de masquage (9) couvre l'illuminateur ou les illuminateurs IR (5).

3. Groupe d'instruments d'affichage (1) selon l'une quelconque des revendications précédentes, dans lequel ledit indicateur ou lesdits indicateurs lumineux (7) servent à indiquer un symbole ou des symboles,
dans lequel la couche d'impression noire (12) comprend une ouverture ou des ouvertures sur l'indicateur ou les indicateurs lumineux (7),
la couche isolée (11) couvre l'indicateur ou les indicateurs lumineux (7), et
la couche IR de masquage (9) comprend une ouverture ou des ouvertures en forme de symbole sur l'indicateur ou les indicateurs lumineux (7).

4. Groupe d'instruments d'affichage (1) selon l'une quelconque des revendications précédentes, comprenant une couche d'homogénéisation (13) entre la couche d'impression noire (12) et l'écran (6) pour diffuser la lumière de l'indicateur ou des indicateurs lumineux (7),
dans lequel la couche d'homogénéisation (13) couvre l'indicateur ou les indicateurs lumineux (7),
la couche d'homogénéisation (13) comprend des ouvertures sur l'écran (6) et la caméra (3), et
la couche d'homogénéisation (13) a également des ouvertures sur l'illuminateur ou les illuminateurs IR (5), si existants.

5. Groupe d'instruments d'affichage (1) selon l'une quelconque des revendications précédentes dans lequel l'ouverture de la couche isolée (11) et de la couche d'impression noire (12) pour la caméra de surveillance du conducteur est située au-dessus d'une zone supérieure de l'écran (6).

6. Groupe d'instruments d'affichage (1) selon l'une quelconque des revendications 2-5 dans lequel l'ouverture de la couche isolée (11) et de la couche d'impression noire (12) pour l'illuminateur ou les illuminateurs IR (5) est située en-dessous d'une zone inférieure de l'écran (6).

7. Groupe d'instruments d'affichage (1) selon l'une quelconque des revendications précédentes dans lequel les ouvertures de la couche d'impression noire (12) et de la couche IR de masquage (9) pour l'indicateur ou les indicateurs lumineux (7) sont situées latéralement sur les côtés de l'écran (6).

8. Groupe d'instruments d'affichage (1) selon l'une quelconque des revendications précédentes comprenant une ou plusieurs caméras de surveillance du conducteur supplémentaires ayant les mêmes ouvertures de couche et couvertures de couche que ladite caméra de surveillance du conducteur.

9. Groupe d'instruments d'affichage (1) selon l'une quelconque des revendications précédentes dans lequel l'infrarouge est proche infrarouge.

10. Groupe d'instruments d'affichage (1) selon la revendication précédente dans lequel le proche infrarouge est une lumière ayant une longueur d'onde située entre 850 et 950 nm.

11. Groupe d'instruments d'affichage (1) selon l'une quelconque des revendications précédentes comprenant également, sur le verre de protection, dans la direction opposée à la direction de l'écran: une couche anti-reflet (17), une couche anti-éblouissement (16), une couche anti-traces de doigts (18), ou des combinaisons de ceux-ci.

12. Procédé pour produire un groupe d'instruments d'affichage automobile (1) avec une caméra de surveillance du conducteur, comprenant un écran (6), un verre de protection d'écran (8), un ou plusieurs indicateurs de lumière visible (7), **caractérisé par** ledit procédé comprenant :
offrir une pluralité de couches optiques entre le verre de protection (8) et l'écran (6), dans la direction allant du verre de protection (8) vers l'écran (6), en :
appliquant une couche IR de masquage (9) qui est transparente à l'infrarouge et opaque à la lumière visible,
appliquant une couche isolée (11) qui est une encre noire partiellement transparente pour donner au groupe une surface monochromatique lorsque l'indicateur ou les indicateurs lumineux (7) sont éteints, et
appliquant une couche d'impression noire (12) qui est opaque à l'infrarouge et à la lumière visible ;
dans lequel la couche IR de masquage (9), la couche isolée (11) et la couche d'impression noire (12) ont une ouverture pour l'écran (6), dans laquelle la couche isolée (11) et la couche d'impression noire (12) comprennent une ouverture dans le trajet optique de ladite caméra (3), et la couche IR de masquage (9) couvre le trajet optique de ladite caméra (3).
